# EUROPÄISCHE PATENTANMELDUNG

(11) **EP 1 302 917 A2**
(43) Veröffentlichungstag der Anmeldung: **16.04.2003**
(21) Anmeldenummer: 02102119.1
(22) Anmeldetag: 09.08.2002
(51) Int. Cl.: G07F 19/00

(54) **Verfahren und Anordnung zur elektronischen Bezahlung einer Ware oder Dienstleistung, insbesondere einer Applikation in einem Datennetz**

(30) Priorität: 16.08.2001 DE 10140335
(71) Anmelder: SIEMENS AKTIENGESELLSCHAFT, 80333 München (DE)
(72) Erfinder: Berg, Andreas, 13591, Berlin (DE); Klatt, Uwe, 13507, Berlin (DE); Lüttge, Karsten, 10318, Berlin (DE); Ryll, Thomas, 10823, Berlin (DE)

(57) **Zusammenfassung**

Verfahren zur elektronischen Bezahlung eines Zahlbetrages, insbesondere eines größeren Betrages oder einer Serie von Kleinstbeträgen für die Nutzung einer durch einen Dienstanbieter bereitgestellten Applikation in einem Datennetz, insbesondere dem Internet, durch einen Kunden an einen Händler unter Einschaltung eines Bezahlsystem-Servers eines Bezahlsystemanbieters, wobei die Bezahlung die Übermittlung einer Bestätigungsnachricht von einem Kunden-Endgerät über ein Mobilfunknetz per USSD ausgeführt wird.

## Beschreibung

Die Erfindung betrifft ein Verfahren zur elektronischen Bezahlung einer Ware oder Dienstleistung nach dem Oberbegriff des Anspruchs 1 sowie eine Anordnung zur Durchführung dieses Verfahrens.

Die Nutzung von über das Internet bereitgestellten Diensten - sei es zur Informationsbeschaffung, zum Knüpfen von Kontakten, zum Einkaufen o.ä. - gehört heute zum Alltag von hunderten Millionen Computernutzern in der ganzen Welt. Mit der Einführung hochleistungsfähiger Übertragungstechnologien auch bei der mobilen Telekommunikation eröffnet sich den Nutzern von Mobilfunk-Endgeräten (entsprechende technische Ausstattung vorausgesetzt) ebenfalls der Zugriff zu diesen Applikationen. Ein zunehmender Anteil dieser Applikationen ist kostenpflichtig, so dass beim Zugriff über ein Mobilfunknetz - wie vor einigen Jahren noch für den Zugriff über ein Datenendgerät - die Frage einer möglichst einfach organisierten und kostengünstigen und dennoch für Kunden und Händler gleichermaßen zuverlässigen Organisation von Bezahlvorgängen - auch beim Erwerb von Waren - steht.

Ganz allgemein sind an der Nutzung einer Applikation im mobilen Internet drei Rollen beteiligt:
Der Dienstanbieter (Service Provider) ist der Anbieter einer Dienstleistung oder einer Ware (eines Services), für die er ein Entgelt verlangt.
   Der Kunde (Consumer) ist der Nutzer einer angebotenen Dienstleistung und muss dafür bezahlen.
   Der Pavment Service Provider (PSP) im Deutschen auch zu bezeichnen als Abrechnungsdientanbieter, wickelt Bezahlungen zwischen Service Providern und Consumers ab. Er ist häufig mit dem Betreiber eines mobilen Kommunikationsnetzwerkes, dem Network Operator, identisch.
In der klassischen Telekommunikationswelt tritt der Network Operator sowohl als Service Provider wie auch als PSP auf. Er bietet Telefoniedienste seinen Kunden an und rechnet sie über seine existierenden Billing Systeme (Postpaid oder Prepaid) ab. Mit der Öffnung der Telekommunikationsnetze (z.B. durch Parlay 3GPP TS 29.198) wie auch innerhalb öffentlicher Datennetze (z.B. Internet) treten auch Dritte als Service Provider auf, die eigene Dienstleistungen anbieten (z.B. Content Provider), jedoch in der Regel kein eigenes Abrechnungsdient besitzen und ein solches auch nicht schaffen können oder wollen.
Der PSP kann dem Service Provider vertrauen, wenn dieser ihm den Geschäftsvorfall einer Dienstnutzung durch den Kunden anzeigt, und auf eine explizite Einverständniserklärung zur Vergebührung durch den Kunden verzichten. Oft wird der PSP dieses Risiko nicht eingehen wollen und eine explizite Einverständniserklärung pro Zahlungsvorgang (oder für eine bestimmte Anzahl von Zahlungsvorgängen mit einem festen Betrag) vom Kunden einholen wollen, speziell wenn es sich um größere Beträge handelt.
Um diese Einverständniserklärung einholen zu können, bedarf es eines Kanals vom PSP zum Kunden, der nicht über den Service Provider geht, sondern direkt ausgeprägt ist. Dieser Kanal sollte möglichst unabhängig vom Typ des Endgerätes und mit geringen Kosten für den PSP verbunden sein, gleichzeitig aber für den Kunden leicht zu bedienen sein und den Sicherheitsanforderungen genügen.
Der Erfindung liegt daher die Aufgabe zugrunde, ein Verfahren sowie eine Anordnung zur Abwicklung eines Bezahlvorganges gemäß diesen Anforderungen bereitzustellen.
Diese Aufgabe wird in ihrem Verfahrensaspekt durch ein Verfahren mit den Merkmalen des Anspruchs 1 und in ihrem Vorrichtungsaspekt durch eine Anordnung mit den Merkmalen des Anspruchs 10 gelöst.

Die vorliegende Erfindung schließt den Gedanken ein, das Problem eines fehlenden Mechanismus zum Einholen einer Einverständniserklärung eines Kundens zu einer oder mehreren Zahlungstransaktionen unter Nutzung eines etablierten Mechanismus in mobilen Telekommunikationsnetzen (Unstructured Supplementary Service Data = USSD) zu lösen. Dies gewährleistet eine kostengünstige Einführung dieses Verfahrens.

In einem Bezahlsystem-Server wird bei einer anstehenden Nutzung der Applikation im Ergebnis der Prüfung eines Kundenprofils des Kunden ein Entscheidungssignal bezüglich der Anforderung einer Bestätigungsnachricht erzeugt. Im Ansprechen auf ein die Anforderung der Bestätigungsnachricht kennzeichnendes positives Entscheidungssignal ("Einverständnis erforderlich") wird die Aussendung eines Network Initiated USSD String über das Mobilfunknetz an ein Kunden-Endgerät ausgeführt.

Üblicherweise triggert der Kunde eine Nutzung der Applikation von einem Mobilfunk-Endgerät, insbesondere über GPRS oder UMTS, und anschließend wird von einem Dienstanbieter-Server die bei diesem Triggervorgang übermittelte MSISDN des Mobilfunk-Endgerätes als Identifikator des Kunden an den Bezahlsystem-Server übermittelt.

Die Aussendung des Network Initiated USSD String wird über eine Verbindung zur Heimatdatei via MAP(Mobile Application Part)-Protokoll 3GPP TS 29.002 realisiert. Hierbei geht typischerweise die Anforderung einer Bestätigungsnachricht von einem Dienststeuerknoten aus, auf dem ein Prepaid-Konto oder auch Postpaid-Konto des Kunden verwaltet wird.

Bevorzugt bezieht der Bezahlsystem-Server entscheidungsrelevante Informationen, insbesondere ein Zahlungslimit für eine bestätigungsfreie Bezahlung durch den Kunden, und/oder einen Authentisierungscode des Kunden über eine Datenverbindung zu einer zentralen Kundendatenbank.

Bei positivem Ergebnis einer Prüfung der Bestätigungsnachricht im Bezahlsystem-Server wird ein Abbuchungsvorgang von einem elektronisch verwalteten Konto des Kunden getriggert und anschließend per USSD eine Ausführungsnachricht an den Kunden gesandt. Auch die Aussendung der Ausführungsnachricht erfolgt im Zusammenwirken des Dienststeuerknotens, auf dem insbesondere das Prepaid-Konto oder Postpaid-Konto des Kunden verwaltet wird, und der Heimatdatei des Mobilfunknetzes ausgeführt wird.

Gemäß etablierten Protokollstrukturen werden bei jeder der oben erwähnten USSD-Kommunikationen USSD gemäß 3GPP 22.030 "Man Machine Interface MMI" zur Auslösung einer Interrogation "*#SC*SI#" bzw. einer Registration "*SC*SI#" genutzt, wobei SC ein Service Code ist und SI einen vom Kunden eingegebenen Authentisierungscode, insbesondere eine PIN, darstellt.

Unter Anordnungs-Gesichtspunkten ist darauf hinzuweisen, dass die Verbindung zwischen dem Dienststeuerknoten und dem Kunden-Endgerät bidirektional über eine Heimatdatei des Mobilfunknetzes organisiert ist. Das Mobile Switching Centre des Mobilfunknetzes ist zur Unterstützung von USSD MAP V2 ausgebildet.

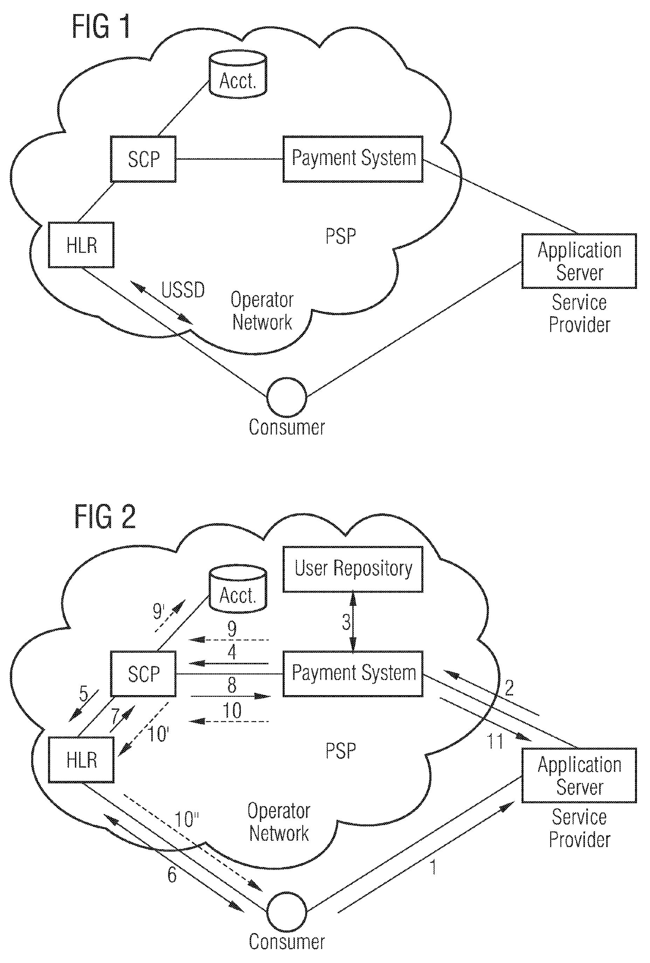

Vorteile und Zweckmäßigkeiten der Erfindung ergeben sich im übrigen aus der nachfolgenden Beschreibung bevorzugter Ausführungsbeispiele bzw. -aspekte anhand der Figuren 1 und 2.

Fig. 1 zeigt die vorgeschlagene Architektur für die "User Confirmation" (Bestätigungsnachricht des Kunden) von Zahlungstransaktionen mit einem festgelegten Betrag. Auslöser ist der Kunde, der sich von seinem Mobilfunk-Endgerät aus über einen beliebigen Weg mit dem Dienstserver des Service Providers in Verbindung setzt. Dies könnte z.B. sein:
- Einwahl über Wählverbindung (RAS - Remote Access Server) und Zugang zu Application Server über TCP/IP (Web/WAP),
- Einwahl über GPRS und Zugang zu Application Server über TCP/IP (Web/WAP),
- Zugang zu Application Server über SMS (Short Message Service),
- Zugang zu Application Server über IVR (Interactive Voice Response).

Voraussetzung ist in jedem Fall, daß der Kunde ein registrierter Nutzer (Subscriber) des Netzbetreibers ist, also eine Geschäftsbeziehung mit diesem besteht, und er bei der Dienstnutzung Zugriff auf sein Mobilfunkendgerät hat.

Wendet sich dann bei anstehender Dienstnutzung der Application Server an ein Abrechnungsdient des Netzbetreibers (z.B. über das OSA Open Service Access 3GPP 29.198 Charging IF), so kann jetzt das Abrechnungsdient entscheiden, ob für diesen Zahlungsvorgang eine Bestätigung durch den Kunden einzuholen ist. Dies kann z.B. im individuellen Kunden-Profil hinterlegt sein (z.B. bei Beträgen über 5 DM User Confirmation einholen). Ist dies der Fall, kann das Abrechnungsdient über eine Verbindung zum SCP (Service Control Point) diesen veranlassen, einen Network Initiated USSD String abzusenden. Dies macht der SCP über die Verbindung zum HLR (Home Location Register) über das MAP Protokoll.

Der USSD-String gelangt dann an das Mobilfunkendgerät des Kunden und könnte ihn um Eingabe seiner persönlichen PIN (Personal Identification Number) bitten. Nach Eingabe dieser PIN würde die Antwortnachricht wieder über das HLR an den SCP gelangen, der sie an das Abrechnungsdient weiterreicht. Dort kann das Abrechnungsdient die eingegebene PIN mit einer (z.B. auf einer zentralen Kundendatenbank) hinterlegten vergleichen und bei Übereinstimmung das Abbuchen des Betrages auf dem kontoführenden SCP veranlassen.
Nach erfolgreichem Abbuchen kann auch eine Benachrichtigung an den Kunden über USSD ausgesendet werden ("Zahlung erfolgreich!").

Vorteile des hier beschriebenen Vorgehens sind die folgenden:
- Es wird das Einholen einer Bestätigungsnachricht ermöglicht, die unabhängig vom Service Provider ist.
- Das vorgestellte Verfahren bietet eine sichere Kommunikationsmöglichkeit mit dem Consumer.
- Gegenüber anderen denkbaren Mechanismen (z.B. SMS) zeichnet sich das hier beschriebene Verfahren durch:
- Garantierte Auslieferung der Nachricht,
- Äußerst geringe Laufzeiten innerhalb des Netzwerkes aus.
- Der USSD-Mechanismus zeichnet sich durch hohe Benutzerfreundlichkeit aus.
- Der USSD-Mechanismus wird von nahezu allen mobilen Endgeräten unterstützt.
- Durch das Verwenden eines standardisierten und schon implementierten Mechanismus (USSD) sind nur geringe Änderungen an dem bestehenden Mobilfunknetz nötig. Als Voraussetzung für die MSC (Mobile Switching Center) ist die Unterstützung von USSD MAP V2 zu nennen.
- Der verwendete Mechanismus verursacht sehr geringe Kosten pro User Confirmation (z.B. im Vergleich zu einem Verfahren basierend auf SMS) für den Network Operator, da es sich um reinen Signalisierungsaufwand handelt.
- Verwendung bei Pre-/Post-paid Konten.
- Durch den Zwang, ein Mobilfunkendgerät in einem Zahlungsvorgang zu verwenden, stellt der Network Operator sicher, dass er über den beschriebenen Weg als PSP involviert ist und eine Zahlung nicht ohne ihn ablaufen kann.

Payment@vantage ist ein Real-Time Kontoführungssystem ("Payment-System"), das Konten für Service Provider verwaltet.

Dieses Abrechnungsdient wird vom PSP betrieben. Die Prepaid-Konten der Kunden liegen auf SCPs (Service Control Points). Der SCP bedient das Interface zu den HLRs und kann so das Aussenden einer Network-Initiated USSD initiieren.

In Fig. 2 ist als Ausführungsbeispiel der Erfindung die Schrittfolge bei der Vergebührung der Nutzung eines Dienstes eines Third-Party Service Providers auf einem Prepaid-Konto darstellt. Die einzelnen Schritte haben folgenden Inhalt:
Schritt 1: Der Nutzer/Kunde wählt sich mit seinem GPRS(General Packet Radio Services)-Endgerät ein und möchte einen Dienst des Service Providers nutzen. Die Übertragung der Daten vom Service Provider zum Kunden und zurück geschieht mittels HTTP (Hypertext Transport Protocol).
Schritt 2: Der Application Server wendet sich an das Payment System des PSP um eine Vergebührung des Dienstes anzustoßen. Inhalt dieser Anfrage ist die Identifikation des Consumers (MSISDN) sowie Angaben über Preis und Währung der Dienstnutzung.
Schritt 3: Das Payment System fragt ein zentrales User Repository ab und erhält von dort die Information über individuelle Limits des Kunden, ab denen dieser eine Bestätigungsnachricht geben möchte (z.B. 5 DM). Ebenfalls erhält er die PIN des Kunden.
Schritt 4: Das Payment System sendet an den SCP die Aufforderung, eine Bestätigungsnachricht per USSD einzuholen. Bei bestimmten Firmensystemen wird eine solche Nachricht über das sogenannte "Online-IF" per TCP/IP geschickt.
Schritt 5: Der SCP schickt mittels MSISDN über das Protokoll MAP die Nachricht 'unstructured_SS_Request' an das HLR. Schritt 6: Mit einer network initiated USSD wird der Kunde um die Eingabe seiner persönlichen PIN gebeten. Entsprechende USSD gemäß 3GPP 22.030 'Man-Machine-Interface MMI' lösen eine Interrogation aus ('*#SC*SI#') bzw. eine Registration ('*SC*SI#'). Hierbei ist SC ein nicht für GSM reservierter Service Code und Sl die Supplementary Information, also z.B. 'PIN?'.
Schritt 7: Das HLR sendet die Antwort des Kunden an den SCP zurück. Diese Nachricht enthält die eingegebene PIN des Kunden.
Schritt 8: Der SCP reicht die PIN an das Abrechnungsdient weiter.
Schritt 9, 9': Der Abrechnungsdienst vergleicht die eingegebene PIN mit der von der zentralen Kundendatenbank überreichten und sendet bei Übereinstimmung eine Abbuchungsnachricht an den SCP. Dieser zieht bei genügend großem Guthaben auf dem Pre-paid-Konto des Kunden den vom Service Provider übermittelten Transaktionsbetrag von dem Konto ab und meldet dieses an das Payment System zurück. Das Payment System kann jetzt diesen Betrag einem dort geführten Konto des Service Providers gutschreiben.
Schritt 10,10',10": Das Abrechnungsdient fordert den SCP auf, eine Notifikations-Nachricht an den Kunden abzusetzen, die diesen über die erfolgreiche Zahlung informiert. Eine Antwort des Kunden ist nicht nötig, die Nachricht wird wie oben beschrieben wieder über das HLR initiiert.
Schritt 11: Das Abrechnungsdient informiert den Service Provider über den erfolgreichen Abbuchungsvorgang, der Service Provider hat damit eine Zahlungsgarantie für sich und kann mit der Auslieferung der Dienstleistung/des Produktes beginnen.

Somit ist der Kunde/Nutzer in der Lage, ab einem bestimmten Betrag mit einer Einzelbestätigung eine Zahlung zu autorisieren, der PSP hat sich über das Einholen der Einzelbestätigung beim Consumer rückversichert (die völlig unabhängig vom Service Provider war) und kann so getrost eine Zahlungsgarantie an den Service Provider abgeben. Der Service Provider wiederum muss sich um alle Belange eines Zahlungsflusses nicht kümmern und kann sich auf die Erbringung der Dienstleistung konzentrieren.

## Patentansprüche

1. Verfahren zur elektronischen Bezahlung eines Zahlbetrages, insbesondere eines größeren Betrages oder einer Serie von Kleinstbeträgen für die Nutzung einer durch einen Dienstanbieter bereitgestellten Applikation in einem Datennetz, insbesondere dem Internet, durch einen Kunden an einen Händler unter Einschaltung eines Bezahlsystem-Servers eines Bezahlsystemanbieters,
**dadurch gekennzeichnet, dass**
die Bezahlung die Übermittlung einer Bestätigungsnachricht von einem Kunden-Endgerät über ein Mobilfunknetz per USSD ausgeführt wird.

2. Verfahren nach Anspruch 1,
**dadurch gekennzeichnet, dass**
in dem Bezahlsystem-Server bei einer anstehenden Nutzung der Applikation im Ergebnis der Prüfung eines Kundenprofils des Kunden ein Entscheidungssignal bezüglich der Anforderung einer Bestätigungsnachricht erzeugt und im Ansprechen auf ein die Anforderung der Bestätigungsnachricht kennzeichnendes positives Entscheidungssignal die Aussendung eines Network Initiated USSD String über das Daten- bzw. Telekommunikationsnetz an ein Kunden-Endgerät ausgeführt wird.

3. Verfahren nach Anspruch 2,
**dadurch gekennzeichnet, dass**
die Aussendung des Network Initiated USSD String über eine Verbindung zur Heimatdatei via MAP-Protokoll realisiert wird.

4. Verfahren nach einem der vorangehenden Ansprüche,
**dadurch gekennzeichnet, dass**
die Anforderung einer Bestätigungsnachricht von einem Dienststeuerknoten ausgeht, auf dem ein Prepaid-Konto des Kunden verwaltet wird.

5. Verfahren nach einem der Ansprüche 2 bis 4,
**dadurch gekennzeichnet, dass**
der Bezahlsystem-Server entscheidungsrelevante Informationen, insbesondere ein Zahlungslimit für eine bestätigungsfreie Bezahlung durch den Kunden, und/oder einen Authentisierungscode des Kunden über eine Datenverbindung zu einer zentralen Kundendatenbank empfängt.

6. Verfahren nach einem der vorangehenden Ansprüche,
**dadurch gekennzeichnet, dass**
bei positivem Ergebnis einer Prüfung der Bestätigungsnachricht im Bezahlsystem-Server ein Abbuchungsvorgang von einem elektronisch verwalteten Konto des Kunden getriggert und anschließend per USSD eine Ausführungsnachricht an das Kunden-Endgerät gesandt wird.

7. Verfahren nach Anspruch 6,
**dadurch gekennzeichnet, dass**
die Aussendung der Ausführungsnachricht im Zusammenwirken des Dienststeuerknotens, auf dem insbesondere das Prepaid-Konto oder Prepaid-Konto des Kunden verwaltet wird, und der Heimatdatei des Mobilfunknetzes ausgeführt wird.

8. Verfahren nach einem der vorangehenden Ansprüche,
**dadurch gekennzeichnet, dass**
bei der oder jeder USSD-Kommunikation USSD gemäß 3GPP 22.030 "Man Machine Interface MMI" zur Auslösung einer Interrogation "*SC*SI#" bzw. einer Registration "*SC*SI#" genutzt werden, wobei SC ein Service Code ist und SI einen vom Kunden eingegebenen Authentisierungscode, insbesondere eine PIN, darstellt.

9. Verfahren nach einem der vorangehenden Ansprüche,
**dadurch gekennzeichnet, dass**
der Kunde eine Nutzung der Applikation von einem Mobilfunk-Endgerät, insbesondere über GPRS oder UMTS, triggert und anschließend von einem Dienstanbieter-Server die bei diesem Triggervorgang übermittelte MSISDN des Mobilfunk-Endgerätes als Identifikator des Kunden an den Bezahlsystem-Server übermittelt wird.

10. Anordnung zur Durchführung des Verfahrens nach einem der vorangehenden Ansprüche,
**gekennzeichnet durch**
eine temporäre bidirektionale Verbindungsstruktur zwischen dem Bezahlsystem-Server, einem Dienststeuerknoten eines USSDfähigen Telekommunikationsnetzes und einem an dieses Mobilfunknetz angeschlossenen Kunden-Endgerät.

11. Anordnung nach Anspruch 10,
**dadurch gekennzeichnet, dass**
die Verbindung zwischen dem Dienststeuerknoten und dem Kunden-Endgerät bidirektional über eine Heimatdatei des Mobilfunknetzes organisiert ist.

12. Anordnung nach Anspruch 10 oder 11,
**dadurch gekennzeichnet, dass**
das Mobile Switching Centre des Mobilfunknetzes zur Unterstützung von USSD MAP V2 ausgebildet ist.
